# EUROPÄISCHE PATENTANMELDUNG

(11) **EP 1 566 712 A2**
(43) Veröffentlichungstag der Anmeldung: **24.08.2005**
(21) Anmeldenummer: 05101263.1
(22) Anmeldetag: 18.02.2005
(51) Int. Cl.: G05B 19/042

(54) **Anpassung des Rundungsmodus bei diversitären Gleitpunktoperationen**

(30) Priorität: 19.02.2004 DE 102004008252
(71) Anmelder: SIEMENS AKTIENGESELLSCHAFT, 80333 München (DE)
(72) Erfinder: Krüger, Richard, 85053, Ingolstadt (DE); Schiller, Frank, 90408, Nürnberg (DE)

(57) **Zusammenfassung**

Die Erfindung betrifft eine Industrielle Steuerung, insbesondere speicherprogrammierbare Steuerung und/oder NC-Maschine, zur diversitären Realisierung sicherheitstechnischer Gleitpunktoperationen, bei der mittels einer ersten Abarbeitungsvorrichtung (1) durch eine Gleitpunktoperation auf Basis von zwei Original-Eingangswerten (x, y) ein Original-Ergebnis (Z_{org}) ermittelbar ist, wobei zur Ermittlung des Original-Ergebnis (Z_{org}) ein beliebiger Rundungsmodus verwendet wird, mittels einer zweiten Abarbeitungsvorrichtung (2) durch eine diversitäre Gleitpunktoperation auf Basis von zwei diversitären Eingangswerten (x_{div}, y_{div}) ein diversitäres Ergebnis (Z_{div}) ermittelbar ist, wobei zur Ermittlung des diversitären Ergebnis (Z_{div}) insbesondere ein Rundung-nach-0 Modus verwendet wird und mittels einer Vergleichsvorrichtung (3) eine Differenz zwischen dem Original-Ergebnis (Z_{org}) und dem diversitären Ergebnis (Z_{div}) ermittelbar ist, wobei bei einer Differenz des Original-Ergebnis (Z_{org}) und des diversitären Ergebnis (Z_{div}) das diversitäre Ergebnis (Z_{div}) angepasst wird.

## Beschreibung

Die Erfindung betrifft eine industrielle Steuerung sowie ein Verfahren zur Anpassung des Rundungsmodus diversitärer Gleitpunktoperationen.

Sicherheitsgerichtete Operationen können heutzutage in der Regel diversitär realisiert werden, indem zusätzlich zur normalen Operation eine sogenannte diverstäre Operation ausgeführt wird und die Ergebnisse der beiden durchgeführten Operationen miteinander verglichen werden. Hierbei sollen die sicherheitsgerichteten Operationen auf verschiedene CPUs mit verschiedenen Prozessoren portierbar sein. Werden als sicherheitsgerichtete Operationen Gleitpunktoperationen bzw. Fließoperationen verwendet, besteht hierbei das Problem, dass verschiedene Rundungsmodi zum Beispiel nach der ANSI/IEEE Standard 754-1985-Norm vorliegen können. Bei der diversitären Realisierung sicherheitsgerichteter Operationen kann die Implementierung der abzusichernden Operation sowohl in Form von Hardware als auch in Form von Software vorliegen. Da es zwischen verschiedenen CPUs Unterschiede bei der Abarbeitung der Operationen gibt, müssen unter Umständen Hardware-spezifische Varianten der Operationen implementiert werden. Dies führt zu einem Verlust der Portierbarkeit der Lösung zwischen verschiedenen CPUs. Zusätzlicher Aufwand für die Entwicklung mehrerer Varianten sowie deren Verwaltung würde entstehen.

Verschiedene Gleitpunktimplementierungen haben das Problem, dass sie aufgrund ihrer Komplexität fehlerhaft sind und die diversitären Gleitpunktoperationen unter Umständen aus Hardware- bzw. Software-Unabhängigkeitsanforderungen im jeweiligen Rundungsmodus möglichst einfach angepasst werden müssen. Diversitäre Gleitpunktoperationen für sicherheitstechnische Aufgaben werden derzeit nicht realisiert.

Die Aufgabe der vorliegenden Erfindung ist es, eine industrielle Steuerung sowie ein Verfahren anzugeben, welches eine Realisierung von sicherheitsgerichteten diversitären Gleitpunktoperationen ermöglicht.

Die Aufgabe wird erfindungsgemäß gelöst durch eine industrielle Steuerung, insbesondere speicherprogrammierbare Steuerung und/oder NC-Maschine, zur diversitären Realisierung sicherheitstechnischer Gleitpunktoperationen, bei der mittels einer ersten Abarbeitungsvorrichtung durch eine Gleitpunktoperation auf Basis von zwei Original-Eingangswerten ein Original-Ergebnis ermittelbar ist, wobei zur Ermittlung des Original-Ergebnis ein beliebiger Rundungsmodus verwendet wird, mittels einer zweiten Abarbeitungsvorrichtung durch eine diversitäre Gleitpunktoperation auf Basis von zwei diversitären Eingangswerten ein diversitäres Ergebnis ermittelbar ist, wobei zur Ermittlung des diversitären Ergebnis insbesondere ein Rundung-nach-Null-Modus verwendet wird und mittels einer Vergleichsvorrichtung eine Differenz zwischen dem Original-Ergebnis und dem diversitären Ergebnis ermittelbar ist, wobei bei einer Differenz des Original-Ergebnis und des diversitären Ergebnis das diversitäre Ergebnis angepasst wird.

Die Aufgabe wird weiterhin gelöst durch ein Verfahren zur Anpassung des Rundungsmodus diversitärer Gleitpunktoperationen, bei dem mittels einer ersten Gleitpunktoperation auf Basis von zwei Original-Eingangswerten ein Original-Ergebnis ermittelt wird, wobei zur Ermittlung des Original-Ergebnis ein beliebiger Rundungsmodus verwendet wird, mittels einer zweiten, diversitären Gleitpunktoperation auf Basis von zwei diversitären Eingangswerten ein diversitäres Ergebnis ermittelt wird, wobei zur Ermittlung des diversitären Ergebnis vorzugsweise ein Rundung-nach-Null-Modus verwendet wird und bei einer Differenz des Original-Ergebnis und des diversitären Ergebnis das diversitäre Ergebnis angepasst wird.

Der Erfindung liegt die Erkenntnis zugrunde, dass bei einer diversitären Implementierung mittels Gleitpunktoperationen zwischen der Operation und der kodierten Operation ein Unterschied des Ergebnisses vorliegen kann. Insbesondere beim Ablauf der Operationen auf unterschiedlichen Prozessoren kann es dazu führen, dass unterschiedliche Ergebnisse erzielt werden. Ebenso können die Ergebnisse aufgrund unterschiedlicher Rundungsmodi, die im Rahmen der Gleitpunktarithmetik verwendet werden, unterschiedlich ausfallen. Ziel ist es jedoch, dass das Verfahren, bei dem diversitäre Gleitpunktoperation verwendet werden, auf unterschiedlichen Systemen ablauffähig ist. Hierbei ist der Rundungsmodus des Systems jedoch aus verschiedenen Gründen nicht notwendigerweise bekannt.

Zur Umgehung dieser Schwierigkeiten soll erfindungsgemäß die Rundung der diversitären Operation aufgrund der Differenz zum Ergebnis der eigentlichen Gleitpunktarithmetik erfolgen.

Die Anwendung eines derartigen Verfahrens führt dazu, dass eine Systemunabhängigkeit sowohl von der Hardware- als auch der Softwareumgebung erreicht wird. Des Weiteren kann das Verfahren unabhängig vom jeweiligen verwendeten Rundungsmodus durchgeführt werden. Zusätzlich wird eine Tolerierung einfacher akzeptierbarer Fehlimplementierungen in den komplexen Rundungsmodi erreicht. Insgesamt führt die Implementierung des Verfahrens bzw. die Herstellung einer industriellen Steuerung, auf der ein derartiges Verfahren abläuft, zu einer Kostenersparnis auf der entsprechenden Hardware, da der technische Effekt hier mittels einer Software realisiert wird.

Im folgenden ist die Erfindung anhand der in den Figuren geschilderten Ausführungsbeispiele näher beschrieben und erläutert. Es zeigen:
- FIG 1: eine schematische Darstellung einer industriellen Steuerung zur diversitären Realisierung sicherheitstechnischer Gleitpunktoperationen,
- FIG 2: eine schematische Darstellung des Verfahrens zur Anpassung des Rundungsmodus diversitärer Gleitpunktoperationen,
- FIG 3: ein Schema des Verfahrens mit einem Vergleich der diversitären Soll- und Ist-Werte,
- FIG 4: ein Schema des Verfahrens mit einem Vergleich nichtdiversitärer Soll- und Ist-Werte.

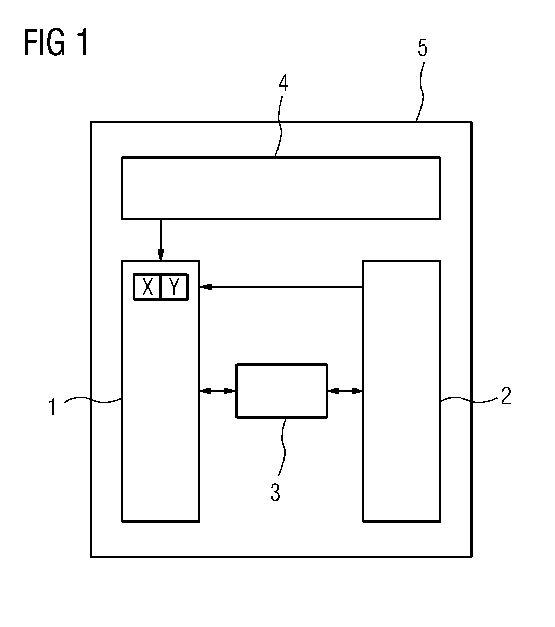

FIG 1 zeigt eine industrielle Steuerung, beispielsweise eine speicherprogrammierbare Steuerung (SPS) oder eine in NC-Maschine, auf der ein Verfahren zur Anpassung des Rundungsmodus diversitärer Gleitpunktoperationen abläuft.

Hierzu ist auf der industriellen Steuerung S eine erste Abarbeitungsvorrichtung vorhanden. Auf der ersten Abarbeitungsvorrichtung 1 wird eine sicherheitsgerichtete Rechenoperation, beispielsweise eine Gleitpunktoperation, durchgeführt. Auf der industriellen Steuerung S ist des Weiteren eine zweite Abarbeitungsvorrichtung 2 vorhanden. Auf der zweiten Abarbeitungsvorrichtung 2 wird eine diversitäre Rechenoperation durchgeführt. Die diversitäre Rechenoperation kann eine Gleitpunktoperation sein. Des Weiteren ist auf der industriellen Steuerung S eine Vergleichsvorrichtung angeordnet. Die Vergleichsvorrichtung 3 dient zum Vergleich der ermittelten Ergebnisse der ersten sicherheitsgerichteten Operation auf der Abarbeitungsvorrichtung 1 und der zweiten, diversitären Rechenoperation auf der Abarbeitungsvorrichtung 2. Auf der industriellen Steuerung S ist des Weiteren ein Block 4 zur Bereitstellung von Gleitpunktoperationen vorgesehen.

Auf der industriellen Steuerung S werden somit parallel im Rahmen des erfindungsgemäßen Verfahrens zwei Operationen durch die Abarbeitungsvorrichtungen 1 und 2 durchgeführt. Diese Operationen können Gleitpunktoperationen sein. Das Ergebnis der parallel durchgeführten Operationen bzw. die Ergebnisse werden mittels der Vergleichsvorrichtung 3 verglichen. Weichen die Ergebnisse voneinander ab, so wird das diversitäre Ergebnis, also das Ergebnis der zweiten Operation, welche mittels der zweiten Abarbeitungsvorrichtung 2 durchgeführt wurde, angepasst. Die Eingangswerte für die Durchführung der ersten Operation auf der ersten Abarbeitungsvorrichtung 1 können entweder aus dem Block 4 der Gleitpunktoperationen stammen, oder aus den diversitären Werten der zweiten Operation, welche auf der zweiten Abarbeitungsvorrichtung 2 durchgeführt wird, gebildet werden.

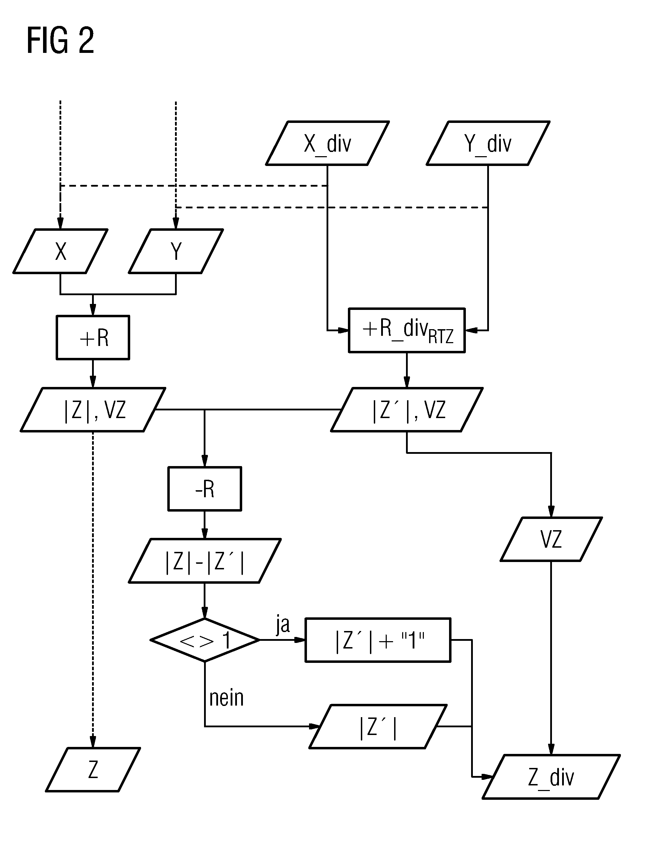

FIG 2 zeigt ein Schema der Ausführungsvariante der Erfindung, bei dem im Fall eines Unterschieds im Betrag der Mantissen der berechneten Gleitpunktzahlen der Betrag des diversitären Ergebnisses der Operation um Eins erhöht wird. Hierbei wird im dargestellten Beispiel die Addition von Z = X + Y grafisch veranschaulicht. Die Originalwerte X und Y werden entweder aus dem Block 4 der Gleitpunktoperationen zur Verfügung gestellt (gepunktete Linie) oder aus den diversitären Werten x_{div}, y_{div} gebildet. Das diversitäre Ergebnis Z_{div} wird im Round-To-Zero-Modus (RTZ) berechnet. Die Differenz zwischen den Beträgen des Original-Ergebnisses Z und des diversitären Ergebnisses Z_{div} entscheidet über die Anpassung des diversitären Ergebnisses Z_{div}.

Hierbei werden die Beträge |Z_{org}| und |Z_{div}| durch die Vergleichsvorrichtung 3 miteinander verglichen. Weichen die Beträge voneinander ab, so wird der Betrag der diversitären Operation bzw. des diversitären Ergebnisses |Z_{div}| um Eins erhöht. Weichen die Ergebnisse nicht voneinander ab, so wird das Ergebnis der diversitären Operation |Z_{div}| direkt übernommen. Das Gesamtergebnis der diversitären Operation wird als Z_{div} dargestellt, indem dem Betrag des Ergebnisses das Vorzeichen VZ wieder zugewiesen wird.

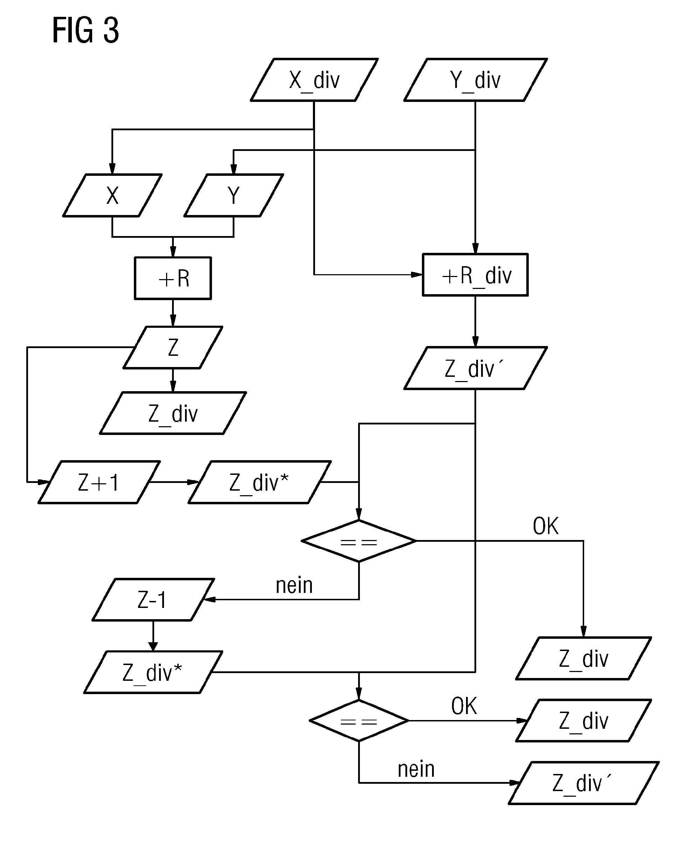

FIG 3 zeigt eine weitere Lösungsvariante des erfindungsgemäßen Verfahrens, bei dem die diversitären Soll- und Ist-Werte verglichen werden. Hierbei werden die ermittelten Ergebnisse der Originalen-Operation Z_{org} und der diversitären Gleitpunktoperation Z_{div} mittels der Vergleichsvorrichtung 3 direkt miteinander verglichen. Sind die Ergebnisse gleich, so wird das diversitäre Ergebnis Z_{div} direkt abgeliefert. Unterscheiden sich die Ergebnisse, so wird das diversitäre Ergebnis Z_{div} um Eins erniedrigt.

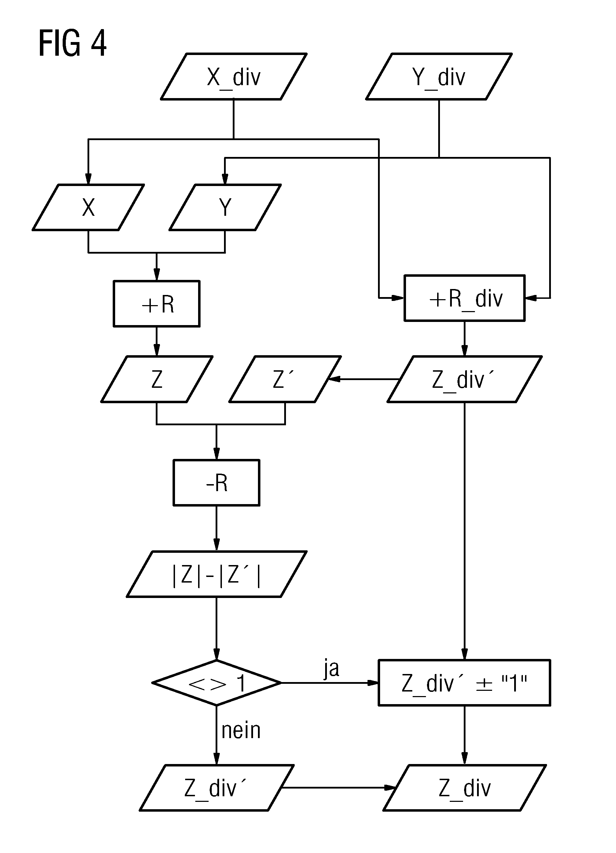

FIG 4 zeigt eine weitere Lösungsvariante des erfindungsgemäßen Systems und Verfahrens. Hierbei werden die nicht-diversitären Soll- und Ist-Werte miteinander verglichen. Bei einer Differenz der Original-Ergebnisse wird das diversitäre Ergebnisse Z_{div} durch Subtraktion oder Addition von Eins angepasst.

## Patentansprüche

1. Industrielle Steuerung, insbesondere speicherprogrammierbare Steuerung und/oder NC-Maschine, zur diversitären Realisierung sicherheitstechnischer Gleitpunktoperationen, bei der
- mittels einer ersten Abarbeitungsvorrichtung (1) durch eine Gleitpunktoperation auf Basis von zwei Original-Eingangswerten (x, y) ein Original-Ergebnis (Z_{org}) ermittelbar ist, wobei zur Ermittlung des Original-Ergebnis (Z_{org}) ein beliebiger Rundungsmodus verwendet wird,
- mittels einer zweiten Abarbeitungsvorrichtung (2) durch eine diversitäre Gleitpunktoperation auf Basis von zwei diversitären Eingangswerten (x_{div}, y_{div}) ein diversitäres Ergebnis (Z_{div}) ermittelbar ist, wobei zur Ermittlung des diversitären Ergebnis (Z_{div}) insbesondere ein Rundungnach-0 Modus verwendet wird und
- mittels einer Vergleichsvorrichtung (3) eine Differenz zwischen dem Original-Ergebnis (Z_{org}) und dem diversitären Ergebnis (Z_{div}) ermittelbar ist, wobei bei einer Differenz des Original-Ergebnis (Z_{org}) und des diversitären Ergebnis (Z_{div}) das diversitäre Ergebnis (Z_{div}) angepasst wird.

2. Industrielle Steuerung nach Anspruch 1,
**dadurch gekennzeichnet, dass**
ein Block (4) zur Bereitstellung der Original-Eingangswerte (x, y) vorgesehen ist.

3. Industrielle Steuerung nach Anspruch 1 oder 2,
**dadurch gekennzeichnet, dass**
die Abarbeitungsvorrichtungen (1,2) zur Angabe des Original-Ergebnis (Z_{org}) und des diversitären Ergebnis (Z_{div}) als Beträge der Mantissen (Z_{org}, VZ_{org}, Z'_{div}, VZ_{div}) vorgesehen sind und bei einer Differenz der Beträge des Original-Ergebnis (Z_{org}) und des diversitären Ergebnis (Z'_{div}) die zweite Abarbeitungsvorrichtung (2) zur Anpassung des Betrags des diversitären Ergebnis (Z'_{div}) durch Erhöhung um 1 vorgesehen ist.

4. Industrielle Steuerung nach Anspruch 1 oder 2,
**dadurch gekennzeichnet, dass**
die Vergleichsvorrichtung (3) zur Durchführung eines Soll-Ist-Vergleichs des Original-Ergebnis (Z_{org}) und des diversitären Ergebnis (Z_{div}) vorgesehen ist und die erste Abarbeitungsvorrichtung (1) zur Anpassung des diversitären Ergebnis (Z_{div}) durch wiederholtes Erhöhen und/oder Erniedrigen um 1 vorgesehen ist.

5. Industrielle Steuerung nach Anspruch 4,
**dadurch gekennzeichnet, dass**
die Vergleichsvorrichtung zum Vergleich der diversitären Soll- (Z_{div}*) und Ist- (Z_{div}') Werte vorgesehen ist.

6. Industrielle Steuerung nach Anspruch 4,
**dadurch gekennzeichnet, dass**
die Vergleichsvorrichtung (3) zum Vergleich der Original Soll- (Z_{org}) und Ist- (Z'_{org}) Werte vorgesehen ist.

7. Verfahren zur Anpassung des Rundungsmodus diversitärer Gleitpunktoperationen, bei dem
- mittels einer ersten Gleitpunktoperation auf Basis von zwei Original-Eingangswerten (x,y) ein Original-Ergebnis (Z_{org}) ermittelt wird, wobei zur Ermittlung des Original-Ergebnis (Z_{org}) ein beliebiger Rundungsmodus verwendet wird,
- mittels einer zweiten, diversitären Gleitpunktoperation auf Basis von zwei diversitären Eingangswerten (x_{div}, y_{div}) ein diversitäres Ergebnis (Z_{div}) ermittelt wird, wobei zur Ermittlung des diversitären Ergebnis (Z_{div}) ein Rundungnach-0 Modus verwendet wird und
- bei einer Differenz des Original-Ergebnis (Z_{org}) und des diversitären Ergebnis (Z_{div}) das diversitäre Ergebnis (Z_{div}) angepasst wird.

8. Verfahren nach Anspruch 7,
**dadurch gekennzeichnet, dass**
die Original-Eingangswerte (x,y) aus einem Block von Gleitpunktoperationen zur Verfügung gestellt und/oder aus den diversitären Eingangswerten (x_{div}, y_{div}) gebildet werden.

9. Verfahren nach Anspruch 7 oder 8,
**dadurch gekennzeichnet, dass**
das Original-Ergebnis (Z_{org}) und das diversitäre Ergebnis (Z_{div}) als Beträge der Mantissen (Z_{org}, VZ_{org}, Z'_{div}, VZ_{div}) angegeben werden und bei einer Differenz der Beträge des Original-Ergebnis (Z_{org}) und des diversitären Ergebnis (Z'_{div}) der Betrag des diversitären Ergebnis (Z'_{div}) durch Erhöhung um 1 angepasst wird.

10. Verfahren nach Anspruch 7 oder 8,
**dadurch gekennzeichnet, dass**
das Original-Ergebnis (Z_{org}) und das diversitäre Ergebnis (Z_{div}) einem Soll-Ist-Vergleich unterzogen werden und eine Anpassung des diversitären Ergebnis (Z_{div}) durch wiederholtes Erhöhen und/oder Erniedrigen um 1 erfolgt.

11. Verfahren nach Anspruch 10,
**dadurch gekennzeichnet, dass**
die diversitären Soll- (Z_{div}*) und Ist- (Z_{div}') Werte verglichen werden.

12. Verfahren nach Anspruch 10,
**dadurch gekennzeichnet, dass**
die Original Soll- (Z_{org}) und Ist- (Z'_{org}) Werte verglichen werden.
